# EUROPEAN PATENT APPLICATION

(11) **EP 1 720 031 A1**
(43) Date of publication of application: **08.11.2006**
(21) Application number: 05009855.7
(22) Date of filing: 04.05.2005
(51) Int. Cl.: G01S 5/00, G01S 5/14

(54) **A method for providing a service to a terminal, the corresponding system and apparatus**

(71) Applicant: SIEMENS AKTIENGESELLSCHAFT, 80333 München (DE)
(72) Inventor: Kulkarni, Vivek, 82008 Unterhaching (DE); Deo, Girija, 82008 Unterhaching (DE)

(57) **Abstract**

A method for providing a service to a terminal (303), comprises the steps of:
at a terminal (303):
- finding a geographical location of the terminal (303);
- storing said geographical location; and
- transmitting a service request (SREQ) comprising said geographical location from the terminal (303) to a system (303B) directly or via at least one network (350); and

at the system (303B):
- in response to receiving the service request (SREQ), providing a location-based service (SERV) to the terminal (303) using said geographical location.

## Description

### Background

In current Location Based Service LBS networks, location-based services are managed through centralized location management servers, such as Gateway Mobile Location Centers GMLC or Location Enabling Solutions LES. Current location-based services are thus server-to-user services.

This makes the development of such services rather complex for a subscriber and for the operator or service provider. Not only that running a centralized location management server is costly, but the services tend to be available in one system only. Furthermore, many users are concerned with issues like possible misuse of the location information, and hence resulting lack of privacy.

### Summary of the invention

It is an object of the present invention to simplify the provision of location-based services.

This can be achieved with a method according to claim 1, with a system according to claim 5, or with a terminal according to claim 8.

The dependent claims describe various advantageous embodiments of the invention.

### Advantages of the invention

If the method for providing a service comprises the steps of, at a terminal: finding a geographical location of the terminal, storing said geographical location, transmitting a service request comprising said geographical location from the terminal to a system directly or via at least one mobile network; and at a system: in response to receiving the service request, providing a location-based service to the terminal using said geographical location, a method for providing decentralized location-based services can be achieved.

If the system is comprised in another terminal, the method can be used for providing real peer-to-peer services. This may increase user control over providing location-based services.

If the system is comprised in an application service provider system, management of location information of terminals can be decentralized. This saves resources at the core network of the mobile network.

If the step of finding the geographical location is performed using satellite positioning, especially by using GPS or Network-Assisted GPS, where mobile network transmits information to obtain faster synchronization to the GPS satellites, the accuracy with which a geographical location can be found may be improved over that when the geographical location is found e.g. by using mobile network positioning. The improved accuracy enables providing more sophisticated services.

### List of Figures

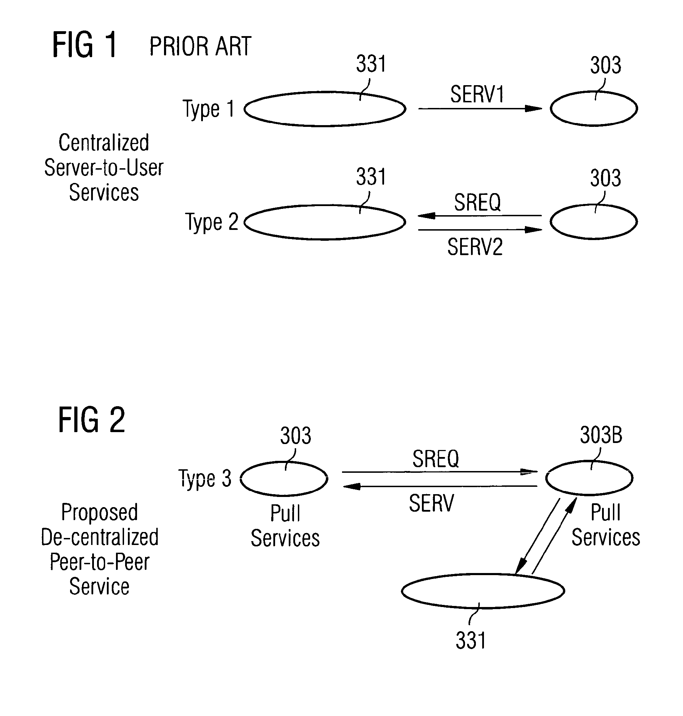

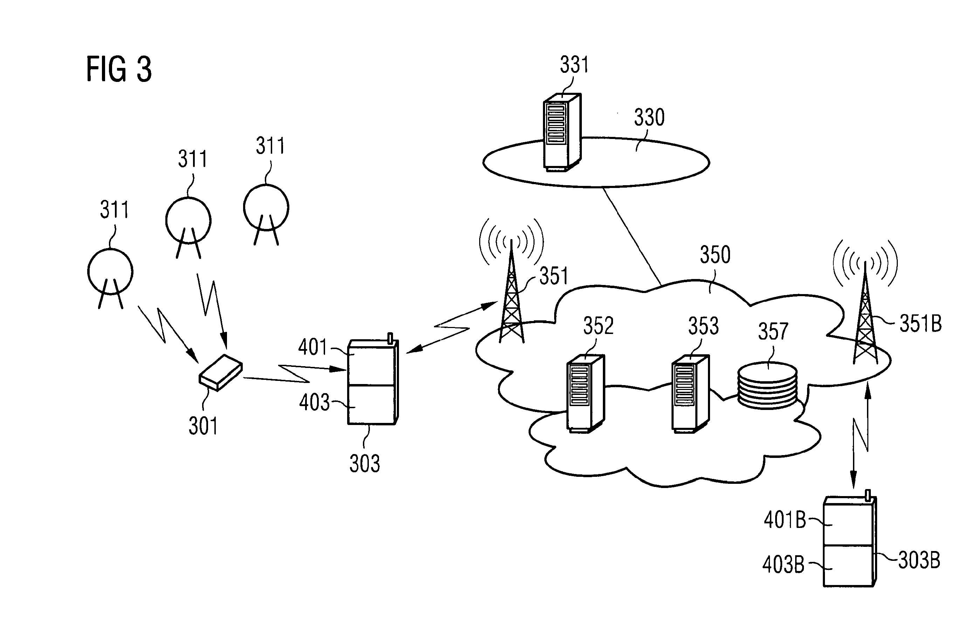

In the following, the invention is described in more detail by way of examples shown in the Figures 2 and 3 of the appended drawings, of which:
Figure 1 illustrates location-based services known in prior art;
Figure 2 illustrates a system for providing decentralized peer to peer services; and
Figure 3 illustrates a method for providing a service to a terminal.

Same reference numerals refer to similar structural elements throughout the Figures.

### Detailed description of the invention

Figure 3 illustrates in more detail a method for providing a service to a terminal 303 according to the present invention. Firstly, the geographical location of the terminal 303 is found out at the terminal 303 using a positioning unit 301, such as a GPS receiver. The positioning unit 301 may be integrated to the terminal 303 or it may be an external device adapted to communicate the geographical location to the terminal 303 via an electrical connection or a wireless link. If the positioning unit 301 is connected to the terminal 303 via an electrical connection, such as a cable, the communication between the positioning unit 301 and the terminal 303 may be carried out over an NMEA-0183 interface. If the positioning unit 301 is connected to the terminal 303 via a wireless link, a Bluetooth or infrared interface can be used.

If the positioning unit 301 is a GPS receiver, it finds the location with help of at least three satellites 311 orbiting the Earth. The skilled person appreciates that the use of a GPS receiver is well known for finding the geographical location. Usually, if the longitude and the latitude are required, it is necessary to have at least three satellites 311 available. If, in addition to the longitude and the latitude, also the altitude is required, a fourth satellite 311 should be available.

After receiving the geographical location from the positioning unit 301, the terminal 303 stores said geographical location. The geographical location may be stored in a memory or in any other register of the mobile terminal 303.

The terminal 303 may comprise a location based services client 401 and an IP multimedia subsystem IMS client 403. Preferably, the positioning unit 301 and the terminal 303 communicate with each other over the LBS client 401.

In prior art systems, the terminal 303 is usually adapted to communicate the geographical location to an application service providing network 330, especially to an application service providing system 331. For this purpose, the session initiation protocol SIP or the Hypertext Transfer Protocol HTTP can be used. The terminal 303 communicates with the application service providing network 330 over mobile network 350 so that it sends messages to the mobile network 350 and the mobile network 350 receives these messages via a base station 351. The base station 351 and further network infrastructure can route the message or messages comprising the location information to the application service providing network 330.

The mobile network 350 comprises a plurality of base stations 351 that can receive messages from terminals 303 over wireless interface Um/Uu. The mobile network 350 further comprises a Proxy-Call State Control Function P-CSCF, Serving-Call State Control Function S-CSCF 353, and home subscriber server HSS 357. These network elements form the core of the IP Multimedia Subsystem IMS core network.

The IMS client 403 at a terminal 303 may open a connection to the application service providing system 331 by sending a SIP request to the P-CSCF 352. The P-CSCF 352 forwards the request using IMS specific protocols to the S-CSCF 353 which makes the connection to the application service providing system 331. The opening of a connection between the IMS client 403 and the P-CSCF 352 takes place over the Gm interface. The established connection between the IMS client 403 and the application service providing system 331 is carried over the Ut interface, using the HTTP, for example.

According to the invention, the terminal 303, upon finding the geographical location, and storing it, generates and transmits the service request SREQ comprising the geographical location to another terminal 303B which may receive it through a base station 351B. The other terminal 303B comprises a system adapted to provide the service to the terminal 303.

The terminal 303B, in response to receiving the service request SREQ, provides a location based service SERV to the terminal 303 using said geographical location. The location based service can be any service, in providing which a geographical location of the terminal 303 by which the request for the service was made, is used.

Because the geographical location of the terminal 303 is stored at the terminal 303, management of the location information becomes decentralized. In this manner, the user can be given full control over his or her location information. By not storing location information of the terminal 303 on any operator server, such as the application service providing system 331, in contrast to prior art systems, but by sending it to another terminal 303B, location information can be exchanged between peers using any signaling platform, such as IMS, which enables which enables providing versatile services between peers. Furthermore, the geographical location is encrypted before transmission, potential leakage of users location information can be totally avoided. In this manner, information security and privacy of the user can be guaranteed.

If the positioning unit 301 is a GPS receiver, network-independent positioning can be obtained. Even better, the accuracy of the positioning is very high, in the range of few meters of error. So the system can be used for high-end applications as well.

By decentralizing location management, mobile network 350 load can be reduced, since location information of the terminals 303 does not need to be updated periodically by the mobile network 350 or by the application service providing system 331. The presence server memory space can thus be freed for other purposes.

Figure 1 illustrates such location-based services known in prior art. A type 1 service, a push service SERV1, is provided by an application service providing system 331 to terminal 303. The application service providing system 331 obtains, prior to providing the service SERV1, the geographical location of the terminal 303 from a Location Management Server LMS in an application service providing system 431.

A type 2 service, a pull service SERV2 is provided from an application service providing system 331 to terminals 303 upon request SREQ from the terminal 303. The geographical location of the terminal 303 is, like for the type 1 services, obtained from a Location Management Server LMS in an application service providing system 431.

Figure 2 illustrates a system according to the present invention for providing decentralized peer to peer services. Instead of, or in addition to providing services to the terminal 303 by an application service providing system 331, providing services is now enabled between peers. In other words, if the terminal 303 sends a service request SREQ to other terminal 303B, the other terminals 303B may provide the service SERV to the terminal 303 either by providing it itself, or using an application service providing system 331 to provide the service to terminal 303. An idea underlying the invention is that the terminal 303 receives the service SERV from the other terminal 303B, either directly or through the mobile network 350.

If IP Multimedia Subsystem IMS, Wireless Village, or any other control platform that may provide Instant Messaging service in almost real-time is used, as the basis for application service providing network, the communication of a location information or service request SREQ and of a service response SERV between terminals 303, 303B can function as perfect peer-to-peer service. Hence, the location management can be done in de-centralized fashion by the user him- or herself or users themselves rather than by any central management server.

On the control plane, CSCF servers are used for establishing SIP session between two peers. The communication may also be carried out without any SIP session by using Instant Messaging, in which case the terminals 303 and 303B need software and hardware enhancement to support the provision of location-based services. For positioning, either GPS or A-GPS receiver can be used. An application service provider system 331 may provide information and data services, such as location map, map-based navigation. The terminal 303B can be used to receive geographical location data of terminal 303 for tracking or monitoring terminal 303.

The mobile network 350 may be a cellular network, especially a GSM, GPRS, UMTS or CDMA network. Instead of this or in addition to it, the mobile network 350 may also be a part of the Internet comprising a wireless local access network.

Even though the invention was described by way of examples, the skilled person appreciates that the invention is not limited to these, but can be applied to a number of different systems and services within the scope and spirit of the appended patent claims.

### List of reference numerals used

- 301: positioning unit
- 303: terminal
- 300B: terminal
- 311: satellite
- 330: application service provider network
- 331: application service providing system
- 350: mobile network
- 351: base station
- 351B: base station
- 351: P-CSCF
- 353: S-CSCF
- 357: HSS
- 401: LBS client
- 403: IMS client

## Claims

1. A method for providing a service to a terminal (303), **comprising the steps of:**
at a terminal (303):
- finding a geographical location of the terminal (303);
- storing said geographical location; and
- transmitting a service request (SREQ) comprising said geographical location from the terminal (303) to a system (303B) directly or via at least one network (350); and
at the system (303B):
- in response to receiving the service request (SREQ), providing a location-based service (SERV) to the terminal (303) using said geographical location.

2. A method according to claim 1, **wherein:** the system (303B) is comprised in another terminal.

3. A method according to claim 1, **wherein:** the system (303B) is an application service provider system.

4. A method according to any one of claims 1 to 3, **wherein:**
the step of finding the geographical location is performed using satellite positioning.

5. A system (303B) for providing a service to a terminal (303), **comprising:**
- means adapted to receive a service request (SREQ), comprising a geographical location of a terminal (303);
- means adapted to provide a location-based service (SERV) to the terminal (303) using said geographical location.

6. A system (303B) according to claim 5, **wherein:** the system (303B) is comprised in a terminal.

7. A system (303B) according to claim 5, **wherein:** the system (303B) is an application service provider system.

8. A terminal (303), **comprising:**
- means adapted to find a geographical location of the terminal (303);
- means adapted to store said geographical location;
- means adapted to transmit a service request (SREQ) comprising said geographical location from the terminal (303) to a system (303B) directly or via at least one network (350);
- means for receiving a service (SERV) from the system (303B) directly or via at least one network (350).

9. A terminal (303) according to claim 8, **wherein:** the means adapted to find a geographical location of the terminal (303) comprise satellite positioning means.
